# EUROPEAN PATENT APPLICATION

(11) **EP 4 682 602 A1**
(43) Date of publication of application: **21.01.2026**
(21) Application number: 24777703.0
(22) Date of filing: 12.03.2024
(51) Int. Cl.: G02B 6/12

(54) **OPTICAL CHIP, PACKAGING METHOD FOR OPTICAL CHIP, AND RELATED DEVICE**

(30) Priority: 31.03.2023 CN 202310379103
(71) Applicant: Huawei Technologies Co., Ltd., Shenzhen, Guangdong 518129 (CN)
(72) Inventor: ZHANG, Wenqi, Shenzhen, Guangdong 518129 (CN); MALAM, Anver, Shenzhen, Guangdong 518129 (CN); DUMAIS, Patrick, Shenzhen, Guangdong 518129 (CN)
(74) Representative: Goddar, Heinz J.
(86) International application number: PCT/CN2024/081128
(87) International publication number: WO 2024/198913

(57) **Abstract**

An optical chip (400), a packaging method for the optical chip (400), and a related device are provided, which can improve coupling efficiency between an optical fiber array of an optical fiber connector (403) and an optical waveguide array of the optical chip (400) when a mechanical tolerance exists in a detachable connection between the optical chip (400) and the optical fiber connector (403). The optical chip (400) includes a photonic integrated circuit PIC (401), a fastening substrate (402), a first lens array (450), and a second lens array (460). A first end of the fastening substrate (402) is configured to detachably connect to the optical fiber connector (403), and a second end of the fastening substrate (402) is connected to the photonic integrated circuit PIC (401). The optical chip (400) includes at least one optical channel. Each of the at least one optical channel includes optical waveguides (411, 412, 413, and 414) located on a surface of the photonic integrated circuit PIC (401), second lenses (461, 462, 463, and 464) included in the second lens array (460), and first lenses (451, 452, 453, and 454) included in the first lens array (450). Optical fibers (421, 422, 423, and 424) of the optical fiber connector (403), the first lenses (451, 452, 453, and 454), the second lenses (461, 462, 463, and 464), and the optical waveguides (411, 412, 413, and 414) are optically aligned in sequence.

## Description

This application claims priority to Chinese Patent Application No. CN202310379103.2, filed with the China National Intellectual Property Administration on March 31, 2023 and entitled "OPTICAL CHIP, PACKAGING METHOD FOR OPTICAL CHIP, AND RELATED DEVICE", which is incorporated herein by reference in its entirety.

### TECHNICAL FIELD

This application relates to the field of optical communication technologies, and in particular, to an optical chip, a packaging method for the optical chip, and a related device.

### BACKGROUND

In the field of information communication technology (information and communication technology, ICT), as a communication capacity of an optical communication device is improved, a requirement for a data transmission rate between optical communication devices is increasingly high. An optical network includes a plurality of optical communication devices. A photoelectric conversion apparatus of each optical communication device is a module that has an optical-to-electrical conversion function and an electrical-to-optical conversion function. The photoelectric conversion apparatus is detachably connected to an optical fiber connector. An optical fiber array included in the optical fiber connector is configured to exchange an optical signal with an optical waveguide array of the photoelectric conversion apparatus.

The photoelectric conversion apparatus and the optical fiber connector are detachably connected based on a mechanical structure. However, a tolerance of the mechanical structure for detachably connecting the photoelectric conversion apparatus and the optical fiber connector is large. Therefore, the optical fiber array and the optical waveguide array cannot be precisely optically aligned. Consequently, coupling efficiency of the optical signal exchanged between the optical fiber array and the optical waveguide array is reduced.

### SUMMARY

Embodiments of this application provide an optical chip, a packaging method for the optical chip, and a related device, which can improve coupling efficiency between an optical fiber array of an optical fiber connector and an optical waveguide array of the optical chip when a mechanical tolerance exists in a detachable connection between the optical chip and the optical fiber connector.

A first aspect of this application provides an optical chip, including a photonic integrated circuit PIC, a fastening substrate, a first lens array, and a second lens array. A first end of the fastening substrate is configured to detachably connect to an optical fiber connector, and a second end of the fastening substrate is connected to the PIC. The first lens array and the second lens array are connected on a surface of the fastening substrate, and the second lens array is located between the PIC and the first lens array. The optical chip includes at least one optical channel. Each of the at least one optical channel includes an optical waveguide located on a surface of the PIC, a second lens included in the second lens array, and a first lens included in the first lens array. An optical fiber of the optical fiber connector, the first lens, the second lens, and the optical waveguide are optically aligned in sequence. The first lens and the second lens are jointly configured to converge an optical signal from the optical waveguide to the optical fiber, or the first lens and the second lens are jointly configured to converge an optical signal from the optical fiber to the optical waveguide.

As shown in this aspect, because the first lens array and the second lens array jointly adjust an optical path between an optical waveguide array and an optical fiber array, coupling efficiency between the optical fiber array and the optical waveguide array can be improved. The optical fiber of the optical fiber connector, the first lens, the second lens, and the optical waveguide are optically aligned in sequence. In addition, because the first lens and the second lens are fastened on a same fastening substrate, and the fastening substrate has limitation effect on a position, the fastening substrate can keep the first lens and the second lens in an optically aligned state. In this case, the first lens and the second lens can implement high-precision coupling between the optical fiber and the optical waveguide. The high-precision coupling can compensate for a mechanical tolerance of a detachable connection between the optical fiber connector and the fastening substrate.

Based on the first aspect, in an optional implementation, a center of an optical surface of the optical fiber, a center of the first lens, a center of the second lens, and a center of an optical surface of the optical waveguide are located on a same straight line. The optical surface of the optical fiber faces the first lens, the optical surface of the optical waveguide faces the second lens, and a curved surface of the first lens and a curved surface of the second lens face each other.

Based on this implementation, when the center of the optical surface of the optical fiber, the center of the first lens, the center of the second lens, and the center of an optical surface of the optical waveguide are located on the same straight line, high-precision coupling between the optical waveguide array and the optical fiber array is implemented, and coupling efficiency is improved.

Based on the first aspect, in an optional implementation, both the first lens array and the second lens array are both bonded to the surface of the fastening substrate through mechanical glue.

In this implementation, the first lens array and the second lens array are both bonded to the surface of the fastening substrate through the mechanical glue. Therefore, even if the optical chip is in a high-temperature environment of a reflow soldering oven, a case of position shift and misalignment or even falling off of the first lens array and/or the second lens array does not occur. This effectively ensures that the first lens array and the second lens array are always in the optically aligned state, and further ensures coupling efficiency between the optical waveguide array and the optical fiber array.

Based on the first aspect, in an optional implementation, the fastening substrate extends in a direction away from the surface of the fastening substrate to form the first lens array and the second lens array.

In this implementation, the fastening substrate, the first lens array, and the second lens array are implemented in an integrated molding manner. This further improves stability of structures of the first lens array and the second lens array that are fastened on the fastening substrate. In this way, the first lens array and the second lens array do not need to be fastened on the fastening substrate through optical glue or the mechanical glue, which avoids a case in which the optically aligned state between the first lens array and the second lens array changes in the high-temperature reflow soldering oven or in a normal working state.

Based on the first aspect, in an optional implementation, the optical chip further includes a heat dissipation panel. A surface of the heat dissipation panel includes a bonding layer formed by the mechanical glue. The heat dissipation panel and the fastening substrate are fastened via the bonding layer, the heat dissipation panel and the PIC are fastened via the bonding layer, and the fastening substrate and the PIC are fastened via the bonding layer. A glue overflow groove is concavely disposed on the surface of the fastening substrate, and the glue overflow groove is located between the second lens array and the PIC.

In this implementation, the glue overflow groove is located between the second lens array and the PIC, so that even if the glue used to form the bonding layer overflows between the PIC and the fastening substrate, the overflowed glue is accommodated in the glue overflow groove and flows out from the glue overflow groove. This effectively prevents the glue from contaminating a second lens component, and avoids a case in which coupling efficiency between the optical waveguide array and the optical fiber array is reduced because the second lens component is contaminated by the glue. In addition, based on the bonding layer made of the mechanical glue, a degree of warping and deformation of the optical chip because of thermal stress can be reduced as much as possible. Therefore, even if the optical chip undergoes the high temperature in the reflow soldering oven, coupling efficiency between the optical fiber array and the optical waveguide array can be ensured.

Based on the first aspect, in an optional implementation, a first connecting member is disposed at the first end of the fastening substrate. The first connecting member is configured to detachably connect to a second connecting member of the optical fiber connector.

Based on this implementation, the first connecting member is disposed on the fastening substrate, so that the fastening substrate can be detachably connected to various different types of optical fiber connectors.

A second aspect of this application provides a packaging method for an optical chip. The optical chip includes a photonic integrated circuit PIC, a fastening substrate, a first lens array, and a second lens array. The method includes: connecting a second end of the fastening substrate to the PIC; connecting a first end of the fastening substrate to an optical fiber connector; connecting the first lens array on a surface of the fastening substrate, where the optical chip includes at least one optical channel, and each of the at least one optical channel includes a first lens in the first lens array and an optical waveguide located on a surface of the PIC; optically aligning an optical fiber of the optical fiber connector, the first lens, and the optical waveguide; connecting the second lens array on the surface of the fastening substrate and at a position between the first lens array and the PIC, where the optical channel further includes a second lens in the second lens array; and optically aligning the optical fiber of the optical fiber connector, the first lens, the second lens, and the optical waveguide.

According to the method shown in this aspect, the optical fiber of the optical fiber connector, the first lens, and the optical waveguide are first optically aligned. When the first lens is fastened on the fastening substrate, the optical fiber of the optical fiber connector, the first lens, the second lens, and the optical waveguide are then optically aligned. This effectively ensures that the optical fiber of the optical fiber connector, the first lens, the second lens, and the optical waveguide that are on each optical channel in the optical chip are optically aligned. In this way, even if a specific mechanical tolerance exists in a detachable connection between the fastening substrate and the optical fiber connector, the optical fiber of the optical fiber connector, the first lens, the second lens, and the optical waveguide can be precisely optically aligned by using the packaging method shown in this aspect. This compensates for the mechanical tolerance between the fastening substrate and the optical fiber connector as much as possible, and improves coupling efficiency between the optical fiber array and the optical waveguide array.

Based on the second aspect, in an optional implementation, the optical fiber connector is configured to connect to a light source, and the optical fiber connector is configured to receive alignment light from the light source. Optically aligning the optical fiber of the optical fiber connector, the first lens, and the optical waveguide includes: optically aligning the optical fiber of the optical fiber connector, the first lens, and the optical waveguide based on the alignment light; and optically aligning the optical fiber of the optical fiber connector, the first lens, the second lens, and the optical waveguide includes: optically aligning the optical fiber of the optical fiber connector, the first lens, the second lens, and the optical waveguide based on the alignment light.

In this implementation, based on the alignment light from the light source, the optical fiber of the optical fiber connector, the first lens, and the optical waveguide can be precisely optically aligned, and the optical fiber of the optical fiber connector, the first lens, the second lens, and the optical waveguide can be precisely optically aligned. This effectively improves coupling efficiency between the optical fiber array and the optical waveguide array, and can compensate for a mechanical tolerance between the optical chip and the optical fiber connector.

Based on the second aspect, in an optional implementation, a center of an optical surface of the optical fiber, a center of the first lens, a center of the second lens, and a center of an optical surface of the optical waveguide are located on a same straight line. The optical surface of the optical fiber faces the first lens, the optical surface of the optical waveguide faces the second lens, and a curved surface of the first lens and a curved surface of the second lens face each other.

For descriptions of beneficial effects of this implementation, refer to the descriptions shown in first aspect. Details are not described again.

Based on the second aspect, in an optional implementation, connecting the first lens array on the surface of the fastening substrate includes: bonding the first lens array on the surface of the fastening substrate through mechanical glue; and connecting the second lens array on the surface of the fastening substrate and at the position between the first lens array and the PIC includes: bonding the second lens array on the surface of the fastening substrate and at the position between the first lens array and the PIC through the mechanical glue.

Based on the second aspect, in an optional implementation, before connecting the first lens array on the surface of the fastening substrate, the method further includes: disposing a bonding layer formed by the mechanical glue on a surface of a heat dissipation panel; connecting the heat dissipation panel and the fastening substrate via the bonding layer; connecting the heat dissipation panel and the PIC via the bonding layer; and concavely disposing a glue overflow groove on the surface of the fastening substrate, where the glue overflow groove is located between the second lens array and the PIC; and connecting the second end of the fastening substrate to the PIC includes: connecting the fastening substrate and the PIC via the bonding layer.

Based on the second aspect, in an optional implementation, connecting the first end of the fastening substrate to the optical fiber connector includes: disposing a first connecting member at the first end of the fastening substrate; and detachably connecting to a second connecting member at the optical fiber connection end through the first connecting member.

A third aspect of this application provides a photoelectric conversion apparatus, including at least one electronic integrated circuit EIC and the optical chip according to any implementation of the first aspect. Each of the at least one EIC is electrically connected to the optical chip.

For descriptions of beneficial effects of this aspect, refer to the descriptions shown in the first aspect. Details are not described again.

Based on the third aspect, in an optional implementation, each EIC is flip-chip soldered to a transfer substrate, the optical chip is flip-chip soldered to a side surface that is of the EIC and that is away from the transfer substrate, and the EIC is electrically connected to the optical chip through the transfer substrate.

Based on the third aspect, in an optional implementation, the optical chip is flip-chip soldered to a transfer substrate, the EIC is flip-chip soldered to a side surface that is of the optical chip and that is away from the transfer substrate, and the EIC is electrically connected to the optical chip through the transfer substrate.

Based on the third aspect, in an optional implementation, the optical chip and each EIC are both flip-chip soldered to a transfer substrate, and the EIC is electrically connected to the optical chip through the transfer substrate.

Based on the third aspect, in an optional implementation, the transfer substrate includes a test interface. The test interface is configured to test whether the photoelectric conversion apparatus successfully receives and sends an optical signal.

In this implementation, the test interface is configured to connect to an external test device. The external test device tests, through the test interface, whether the photoelectric conversion apparatus can successfully receive and send the optical signal, that is, detects whether the photoelectric conversion apparatus is a known good die KGD. When it is determined that the photoelectric conversion apparatus is the KGD, the photoelectric conversion apparatus is flip-chip soldered to a switch substrate and is packaged to form an optical communication device. This improves a product yield of the optical communication device.

A fourth aspect of this application provides a co-packaged optics chip, including a switch substrate, a logic processing chip, and the photoelectric conversion apparatus according to any implementation of the second aspect. The logic processing chip and the photoelectric conversion apparatus are both flip-chip soldered to the switch substrate.

A fifth aspect of this application provides an optical communication device, including an outer housing, a circuit board, a driver, a laser, and the co-packaged optics chip according to the fourth aspect. The inside of the outer housing is configured to fasten the circuit board. The driver, the laser, and the co-packaged optics chip are all packaged on a surface of the circuit board. The driver is configured to drive the laser to send a first optical signal to the co-packaged optics chip. The co-packaged optics chip is configured to modulate the first optical signal to obtain a modulated first optical signal, and the co-packaged optics chip is configured to emit the modulated first optical signal. Alternatively, the co-packaged optics chip is configured to receive a second optical signal, and the co-packaged optics chip is further configured to convert the second optical signal into an electrical signal through optical-to-electrical conversion.

For descriptions of beneficial effects of this aspect, refer to the descriptions shown in the first aspect. Details are not described again.

A sixth aspect of this application provides an optical network. The optical network includes a plurality of optical communication devices. For descriptions of a structure and beneficial effects of each optical communication device, refer to the descriptions shown in the fifth aspect. Details are not described again.

### BRIEF DESCRIPTION OF DRAWINGS

FIG. 1 is an example top view of a structure of a CPO chip according to this application;
FIG. 2 is an example sectional view of a structure of a CPO chip according to this application;
FIG. 3 is an example diagram of a structure of a first embodiment of a photoelectric conversion apparatus according to this application;
FIG. 4 is an example diagram of a discrete structure of an embodiment of an optical chip and an optical fiber connector in a first plane according to this application;
FIG. 5 is an example bottom view of a structure of the optical chip and the optical fiber connector that are shown in FIG. 4 and that are in a second plane;
FIG. 6 is an example diagram of insertion of the optical chip and the optical fiber connector that are shown in FIG. 4;
FIG. 7 is an example diagram of an optical path of a first optical channel according to this application;
FIG. 8 is an example diagram of simulation of transmitting an optical signal between an optical chip and an optical fiber connector;
FIG. 9 is an example diagram of a structure of a second embodiment of a photoelectric conversion apparatus according to this application;
FIG. 10 is an example diagram of a structure of a third embodiment of a photoelectric conversion apparatus according to this application;
FIG. 11 is an example diagram of a structure of a fourth embodiment of a photoelectric conversion apparatus according to this application;
FIG. 12 is a flowchart of steps of a first embodiment of a packaging method for an optical chip according to this application; and
FIG. 13 is an example diagram of a structure of an embodiment of an optical communication device according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person skilled in the art based on embodiments of this application without creative efforts shall fall within the protection scope of this application.

This application provides an optical communication device, and the optical communication device is used in an optical network. The optical network has advantages such as a high switching speed, a low optical power loss, a low latency, and low costs. The optical network shown in this example may be applied to a data center network (data center network, DCN), a metropolitan area network, a passive optical network (passive optical network, PON), an optical transport network (optical transport network, OTN), or the like. This is not specifically limited. The optical network includes one or more optical communication devices. The optical communication device may be an optical line terminal (optical line terminal, OLT), an optical network unit (optical network unit, ONU), an OTN device, or the like. This is not specifically limited. A specific device type of the optical communication device is not limited in this embodiment. For example, the optical communication device may also be referred to as a router, a switch, a server, or an OTN transport device.

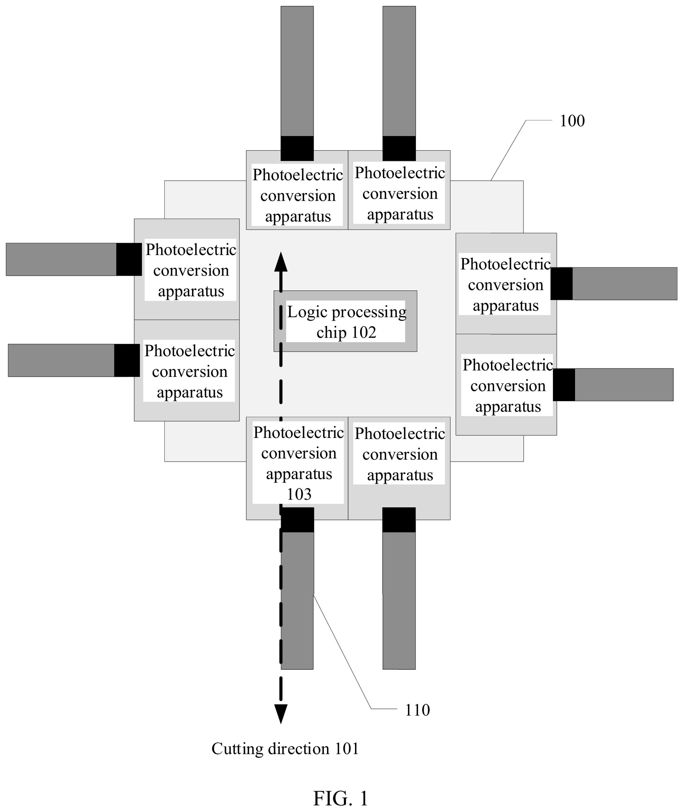

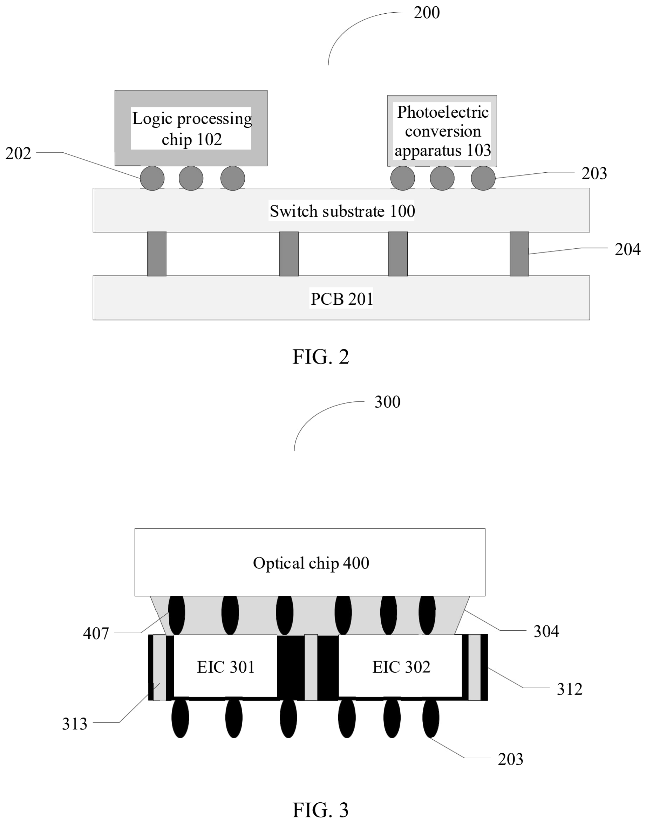

The optical communication device includes a co-packaged optics (co-packaged optics, CPO) integrated component. FIG. 1 is an example top view of a structure of a CPO chip according to this application. FIG. 2 is an example sectional view of the structure of the CPO chip according to this application. The CPO chip includes a switch substrate (switch substrate) 100, a logic processing chip 102, and a plurality of photoelectric conversion apparatuses. The sectional view 200 shown in FIG. 2 is that the CPO chip is cut in a cutting direction 101 shown in FIG. 1, so that the sectional view 200 shows a position relationship between the logic processing chip 102, a photoelectric conversion apparatus 103, the switch substrate 100, and a printed circuit board (printed circuit board, PCB) 201. A quantity of the photoelectric conversion apparatuses included in the CPO chip is not limited in this embodiment. The logic processing chip 102 and each photoelectric conversion apparatus are packaged on the same switch substrate 100, to implement co-packaged optics between the logic processing chip 102 and each photoelectric conversion apparatus. This shortens a distance between the logic processing chip 102 and each photoelectric conversion apparatus, and reduces power consumption of transmitting an electrical signal between the logic processing chip 102 and each photoelectric conversion apparatus, thereby reducing a bit error ratio (bit error ratio, BER) of the optical communication device.

The photoelectric conversion apparatus 103 is used as an example. The photoelectric conversion apparatus 103 is flip-chip soldered to the switch substrate 100 by using a ball grid array (ball grid array, BGA) packaging technology. Flip-chip soldering means that the photoelectric conversion apparatus 103 is disposed on the switch substrate 100, and a front surface of the photoelectric conversion apparatus 103 faces the switch substrate 100. The front surface of the photoelectric conversion apparatus 103 is a surface that is of the photoelectric conversion apparatus and on which an electrical connecting member is disposed. The electrical connecting member may be a solder ball. To electrically connect the photoelectric conversion apparatus 103 to the switch substrate 100, solder balls of the photoelectric conversion apparatus 103 are soldered to the switch substrate 100. For descriptions of flip-chip soldering the logic processing chip 102 to the switch substrate 100 by using the BGA, refer to the descriptions of flip-chip soldering the photoelectric conversion apparatus 103 to the switch substrate 100 by using the BGA. Details are not described herein again. The logic processing chip 102 is electrically connected to the photoelectric conversion apparatus 103 through the switch substrate 100. When the photoelectric conversion apparatus 103 and the logic processing chip 102 are both flip-chip soldered to the switch substrate 100, a distance between the photoelectric conversion apparatus and the switch substrate 100 can be effectively shortened, and a distance between the logic processing chip 102 and the switch substrate 100 can be effectively shortened. This further shortens the distance between the photoelectric conversion apparatus 103 and the logic processing chip 102, and effectively reduces power consumption of transmitting the electrical signal between the photoelectric conversion apparatus 103 and the logic processing chip 102.

For example, the logic processing chip 102 may be an application-specific integrated circuit (application-specific integrated circuit, ASIC). This is not specifically limited. For example, the logic processing chip 102 may also be a field-programmable gate array (field-programmable gate array, FPGA), a system on chip (system on chip, SoC), a central processing unit (central processing unit, CPU), a network processor (network processor, NP), a digital signal processor (digital signal processor, DSP), a microcontroller unit (microcontroller unit, MCU), a programmable controller (programmable logic device, PLD), or another integrated chip, or any combination of the chips.

An optical component such as a driver (Driver, DRV), a trans-impedance amplifier (trans-impedance amplifier, TIA), or a laser may be further packaged on the PCB 201 that is used to package the switch substrate 100 and that is shown in this embodiment. An electrical signal is transmitted between the TIA and the photoelectric conversion apparatus based on the PCB 201. The TIA is configured to amplify a power of the electrical signal transmitted between the photoelectric conversion apparatus and the logic processing chip 102. The driver drives, based on the PCB 201, the laser to emit light. For descriptions of the optical component packaged on the PCB 201 in this embodiment, refer to the foregoing descriptions of packaging the logic processing chip 102 on the switch substrate 100. Details are not described again. A type of the optical component packaged on the PCB 201 is not limited in this embodiment. Optionally, at least one of the foregoing plurality of types of optical components may be directly packaged on the switch substrate 100. The PCB 201 is electrically connected to the switch substrate 100, to electrically connect, based on the switch substrate 100 and the CPB 201, the optical component packaged on the switch substrate 100 to the optical component packaged on the PCB 201. The switch substrate 100 shown in this embodiment may include one or more layers of plates, and a conductive trace is arranged on one or dual surfaces of each plate. A type of the plate is not limited in this embodiment. For example, the plate may be a paper base, a glass fiber cloth base, a composite base, a ceramic base, or a metal core base. Any two optical components packaged on the switch substrate 100 are electrically connected based on the conductive trace of the switch substrate 100. For descriptions of the PCB 201, refer to the descriptions of the switch substrate 100. Details are not described again.

As shown in FIG. 2, a packaged CPO chip is sent to a reflow soldering oven, and the reflow soldering oven can be heated to a high enough temperature (for example, higher than 260 degrees). A position to which the logic processing chip 102 extends out includes solder balls 202. When the solder balls 202 are in a high-temperature environment of the reflow soldering oven, the logic processing chip 102 can be soldered to the switch substrate 100 through the solder balls 202. Similarly, a position to which the photoelectric conversion apparatus 103 extends out includes solder balls 203. When the solder balls 203 are in the high-temperature environment of the reflow soldering oven, the photoelectric conversion apparatus 103 can be soldered to the switch substrate 100 through the solder balls 203. The photoelectric conversion apparatus 103 includes an optical chip and an electronic integrated circuit (electronic integrated circuit, EIC). The photoelectric conversion apparatus 103 includes an optical waveguide array. The photoelectric conversion apparatus 103 is further connected to an optical fiber array 110 shown in FIG. 1. The optical fiber array 110 is coupled to the optical waveguide array of the photoelectric conversion apparatus 103. Coupling means alignment or introduction, so that an optical signal can be transmitted between the optical waveguide array and the optical fiber array 110 that are coupled. If the photoelectric conversion apparatus 103 is configured to emit the optical signal, the EIC is configured to send a service electrical signal to the optical chip, and the optical chip is configured to perform electrical-to-optical conversion on the service electrical signal to obtain a service optical signal. Because the optical waveguide array is coupled to the optical fiber array 110, the optical chip can couple the service optical signal to the optical fiber array 110 to output the service optical signal from the photoelectric conversion apparatus 103. If the photoelectric conversion apparatus 103 is configured to receive the optical signal, the photoelectric conversion apparatus 102 is configured to receive a service optical signal through the optical fiber array 110. The optical fiber array 110 couples the service optical signal to an optical waveguide array of the optical chip, the optical chip performs optical-to-electrical conversion on the service optical signal to obtain a service electrical signal, and the optical chip sends the service electrical signal to the EIC.

In this embodiment, the switch substrate 100 may be connected to the PCB 201 via a socket (socket) 204, and a secure connection is formed between the switch substrate 100 and the PCB 201 through mechanical crimping. The switch substrate 100 is connected to the PCB 201 via the socket 204, so that when the photoelectric conversion apparatus 103 and the logic processing chip 102 are flip-chip soldered to the switch substrate 100, the packaged CPO chip does not need to be placed in the reflow soldering oven again for high-temperature soldering with the PCB 201. A connection manner between the switch substrate 100 and the PCB 201 is not limited in this embodiment. For example, the switch substrate 100 may alternatively be flip-chip soldered to the PCB 201 by using BGA.

This embodiment provides a photoelectric conversion apparatus. For a structure of the photoelectric conversion apparatus shown in this embodiment, refer to FIG. 3. FIG. 3 is an example diagram of a structure of a first embodiment of the photoelectric conversion apparatus according to this application. The photoelectric conversion apparatus 300 shown in FIG. 3 includes an optical chip 400 and an EIC. The photoelectric conversion apparatus 300 shown in this embodiment adopts a three-dimensional (3D) packaging mode. Specifically, the optical chip is flip-chip soldered to a back surface of the EIC. There is an underfill (underfill) 304 between the optical chip 400 and the EIC. Solder balls 407 extending out from the optical chip pass through the underfill 304 and are soldered to the back surface of the EIC. The solder balls shown in this embodiment may also be referred to as solder balls or solder bumps. This is not specifically limited. A front surface of the EIC is a surface that is of the EIC and on which an electrical connecting member is disposed. The back surface of the EIC is a surface that is of the EIC and that is opposite to the front surface of the EIC. The optical chip is flip-chip soldered to the back surface of one EIC or back surfaces of a plurality of EICs. In this embodiment, an example in which the optical chip is flip-chip soldered to back surfaces of two EICs, namely, an EIC 301 and an EIC 302, is used. A quantity of EICs to which one optical chip is flip-chip soldered is not limited in this embodiment. The solder balls 203 extending out from the electrical connecting member of the EIC 301 are soldered to a switch substrate. For descriptions of the switch substrate, refer to the descriptions corresponding to FIG. 2. Details are not described again. The EIC 301 and the EIC 302 described in this embodiment are packaged as a whole through an injection molding layer 312. An electrical connecting member 313 passes through the injection molding layer 312. The injection molding layer 312 further includes a rewiring layer. The electrical connecting member 313 is electrically connected to an electrical connecting member of the optical chip 400 through the rewiring layer.

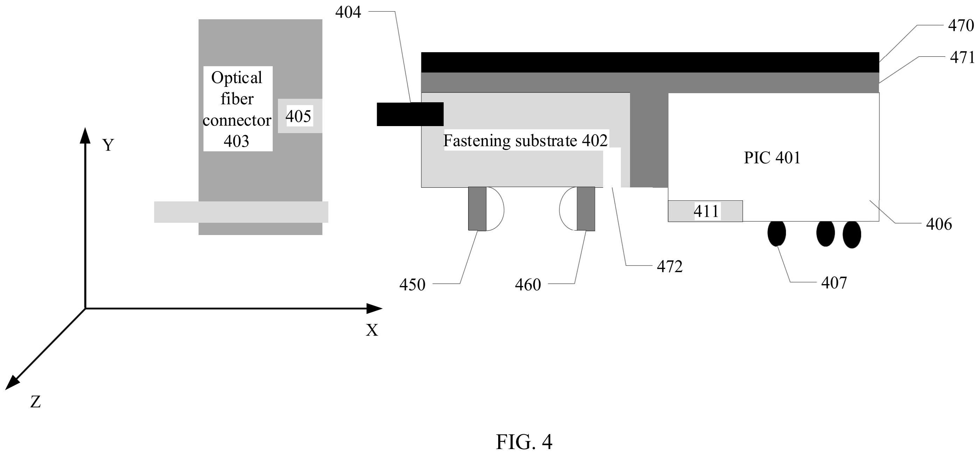

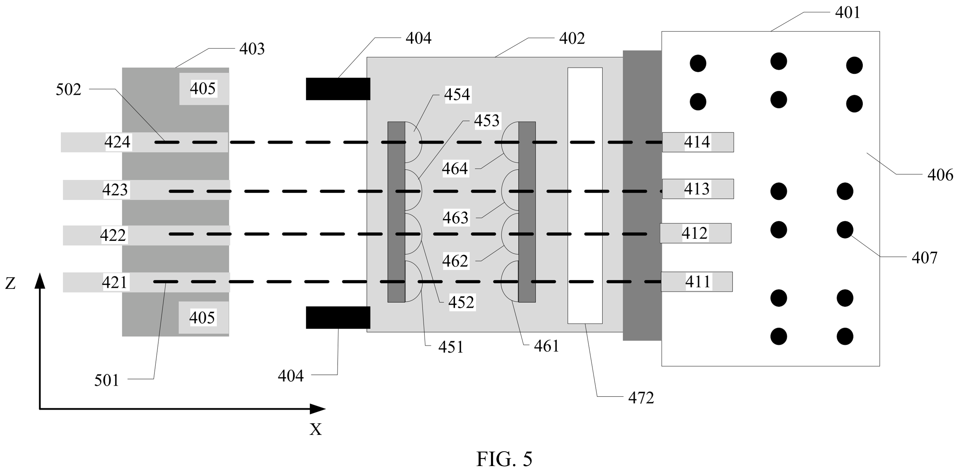

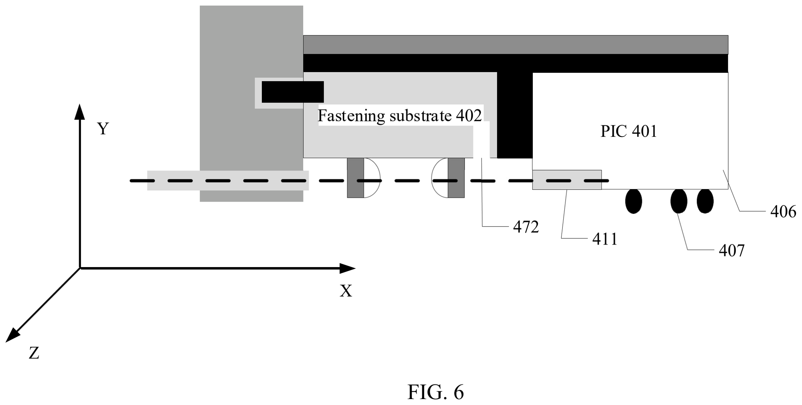

The optical chip provided in this embodiment is configured to be detachably connected to an optical fiber connector. When the optical chip and the optical fiber connector are in a connected state, coupling efficiency between an optical waveguide array of the optical chip and an optical fiber array of the optical fiber connector can be effectively ensured. For a structure that is of the optical chip and that is shown in this embodiment, refer to FIG. 3 to FIG. 6. FIG. 4 is an example diagram of a discrete structure of an embodiment of the optical chip and the optical fiber connector in a first plane according to this application. FIG. 5 is an example bottom view of a structure of the optical chip and the optical fiber connector that are shown in FIG. 4 and that are in a second plane. FIG. 6 is an example diagram of insertion of the optical chip and the optical fiber connector that are shown in FIG. 4. The first plane XY includes a first direction X and a second direction Y. The first direction X is perpendicular to the second direction Y. The second direction Y is a direction perpendicular to a surface of the optical chip. The second plane XZ includes the first direction X and a third direction Z. The third direction Z is separately perpendicular to the first direction X and the second direction Y.

The optical chip 300 includes a photonic integrated circuit (photonic integrated circuit, PIC) 401, a fastening substrate 402, a first lens array, and a second lens array. Specifically, the fastening substrate 402 may be made of a high-temperature-resistant material such as silicon or glass. A first end of the fastening substrate 402 is configured to detachably connect to an optical fiber connector 403. For example, a first connecting member is disposed at the first end of the fastening substrate 402, and a second connecting member is disposed on a side surface that is of the optical fiber connector 403 and that faces the fastening substrate 402. The optical chip 300 can be detachably connected to the optical fiber connector 402 between the first connecting member and the second connecting member. For example, the first connecting member shown in this embodiment is a positioning pin 404 formed through extending the first end of the fastening substrate 402. The second connecting member may be a positioning hole 405 that is concavely disposed on the side surface that is of the optical fiber connector 403 and that faces the fastening substrate 402. In this embodiment, an example in which a quantity of positioning pins 404 is two is used as an example, and a specific quantity is not limited. It may be understood that when the positioning pin 404 of the optical chip 300 is inserted into the positioning hole 405 of the optical fiber connector 403, the optical chip is detachably connected to the optical fiber connector 403. It should be noted that in this embodiment, an example in which the first connecting member is the positioning pin and the second connecting member is the positioning hole is used. In another example, the first connecting member may be the positioning hole, and the second connecting member may be the positioning pin. A type of the optical fiber connector 403 is not limited in this embodiment. For example, the optical fiber connector 403 may be an optical fiber connector of a multi-fiber push on (multi-fiber push on, MPO) type, an optical fiber connector of a ferrule connector (ferrule connector, FC) type, an optical fiber connector of a square connector (square connector, SC) type, an optical fiber connector of a lucent connector (lucent connector, LC) type, an optical fiber connector of a straight tip (straight tip, ST) type, or an optical fiber connector of a fiber distributed data interface (fiber distributed data interface, FDDI) type. A specific type is not limited.

A front surface 413 of the PIC 401 shown in this embodiment is configured to dispose the optical waveguide array. In this embodiment, an example in which a plurality of optical waveguides are arranged in the optical waveguide array is used. For example, in the example shown in FIG. 5, an optical waveguide 411, an optical waveguide 412, an optical waveguide 413, and an optical waveguide 414 are arranged in the optical waveguide array. A quantity of optical waveguides included in the optical waveguide array is not limited in this embodiment. Each optical waveguide may be made of any one of the following materials: monocrystalline silicon (silicon, Si), silicon nitride (silicon nitride, SiN) waveguide, and lithium niobate (lithium niobate, LiNbO3), a silicon oxide (silica, SiO2) waveguide, or the like. The PIC 401 includes an electrical-to-optical converter and an optical-to-electrical converter. A part of optical waveguides included in the optical waveguide array are connected to the electrical-to-optical converter, and the other part of optical waveguides are connected to the optical-to-electrical converter. For example, the optical waveguide 411 and the optical waveguide 412 are connected to the electrical-to-optical converter, while the optical waveguide 413 and the optical waveguide 414 are connected to the optical-to-electrical converter. The PIC 401 shown in this embodiment has an electrical connecting member, and the electrical connecting member extends out from the front surface 406 of the PIC 401 to form the solder balls 407. The front surface 406 of the PIC 401 is a surface that is of the PIC and on which the optical waveguide array and the solder balls 407 are disposed. The solder balls 407 of the PIC are configured to communicate an electrical signal between the PIC and the EIC.

The optical fiber connector 403 includes an optical fiber array. The optical fiber array in this embodiment specifically includes an optical fiber 421, an optical fiber 422, an optical fiber 423, and an optical fiber 424. As shown in this embodiment, coupling efficiency between the optical waveguide array of the optical chip and the optical fiber array of the optical fiber connector can be improved. For example, when the optical waveguide 411 and the optical waveguide 412 in the optical waveguide array are connected to the electrical-to-optical converter of the optical chip, the optical waveguide 411 and the optical waveguide 412 are configured to emit an optical signal through the optical fiber 421 and the optical fiber 422 in the optical fiber connector 403. Specifically, for example, coupling efficiency between the optical waveguide 411 and the optical fiber 421 is a ratio of an optical power Pa1 of an optical signal that is emitted from the optical waveguide 411 and that is incident to the optical fiber 421 to a total optical power Pb1 of the optical signal emitted from the optical waveguide 411, that is, coupling efficiency=Pa1/*Pb*1 between the optical waveguide 411 and the optical fiber 421. For example, when the optical waveguide 413 and the optical waveguide 414 in the optical waveguide array are connected to the optical-to-electrical converter of the optical chip, the optical waveguide 413 and the optical waveguide 414 are configured to receive an optical signal through the optical fiber 423 and the optical fiber 424 in the optical fiber connector 403. Specifically, for example, coupling efficiency between the optical waveguide 413 and the optical fiber 423 is a ratio of an optical power Pa2 of an optical signal that is emitted from the optical fiber 423 and that is incident to the optical waveguide 413 to a total optical power Pb2 of the optical signal emitted from the optical fiber 423, that is, coupling efficiency=Pa2/Pb2 between the optical fiber 423 and the optical waveguide 413.

The fastening substrate 402 shown in this embodiment can effectively improve coupling efficiency between the optical fiber array and the optical waveguide array. Specifically, it has been described above that the first end of the fastening substrate 402 is detachably connected to the optical fiber connector 403, and a second end of the fastening substrate 402 is connected to the PIC 401. A manner in which the second end of the fastening substrate 402 is connected to the PIC 401 is not limited in this embodiment. As shown in FIG. 4, a first lens array 450 and a second lens array 460 that are included in the optical chip are connected to a surface of the fastening substrate 402, and the second lens array 460 is located between the PIC 401 and the first lens array 450. Specifically, refer to FIG. 5. The first lens array 450 includes a first lens 451, a first lens 452, a first lens 453, and a first lens 454. The second lens array 460 includes a second lens 461, a second lens 462, a second lens 463, and a second lens 464. To transmit an optical signal between the optical fiber array and the optical waveguide array, the optical chip includes a plurality of optical channels used to transmit optical signals. A quantity of optical channels is not limited in this embodiment. When the optical waveguide array includes four optical waveguides and the optical fiber array includes four optical fibers, the optical chip shown in this embodiment includes four optical channels. A first optical channel includes the optical waveguide 411, the second lens 461 in the second lens array, the first lens 451 in the first lens array, and the optical fiber 421. A second optical channel includes the optical waveguide 412, the second lens 462 in the second lens array, the first lens 452 in the first lens array, and the optical fiber 422. A third optical channel includes the optical waveguide 413, the second lens 463 in the second lens array, the first lens 453 in the first lens array, and the optical fiber 423. A fourth optical channel includes the optical waveguide 424, the second lens 464 in the second lens array, the first lens 454 in the first lens array, and the optical fiber 424. Each optical channel included in the optical chip is configured to transmit one optical signal.

The first optical channel is used as an example. The optical waveguide 411 is connected to the electrical-to-optical converter, and the optical waveguide 411 obtains a to-be-sent optical signal from the electrical-to-optical converter. The first lens 451 and the second lens 461 included on the first optical channel are jointly configured to couple an optical signal emitted by the optical waveguide 411 to the optical fiber 421 to output the optical signal from the optical chip. To improve coupling efficiency of coupling the optical signal emitted from the optical waveguide 411 to the optical fiber 421, the optical fiber 421, the first lens 451, the second lens 461, and the optical waveguide 411 that are on the first optical channel are optically aligned in sequence. Specifically, as shown in FIG. 5, that the optical fiber 421, the first lens 451, the second lens 461, and the optical waveguide 411 that are on the first optical channel are optically aligned in sequence means that a center of an inlet optical surface of the optical fiber 421, a center of the first lens 451, a center of the second lens 461, and a center of an outlet optical surface of the optical waveguide 411 are located on a same straight line 501. The inlet optical surface of the optical fiber 421 faces the first lens 451, and the outlet optical surface of the optical waveguide 411 faces the second lens 461. It may be understood that the outlet optical surface of the optical waveguide 411 is configured to emit the optical signal to the second lens 461, and the inlet optical surface of the optical fiber 421 is configured to receive an optical signal from the first lens 451. A curved surface of the first lens 451 and a curved surface of the second lens 461 face each other.

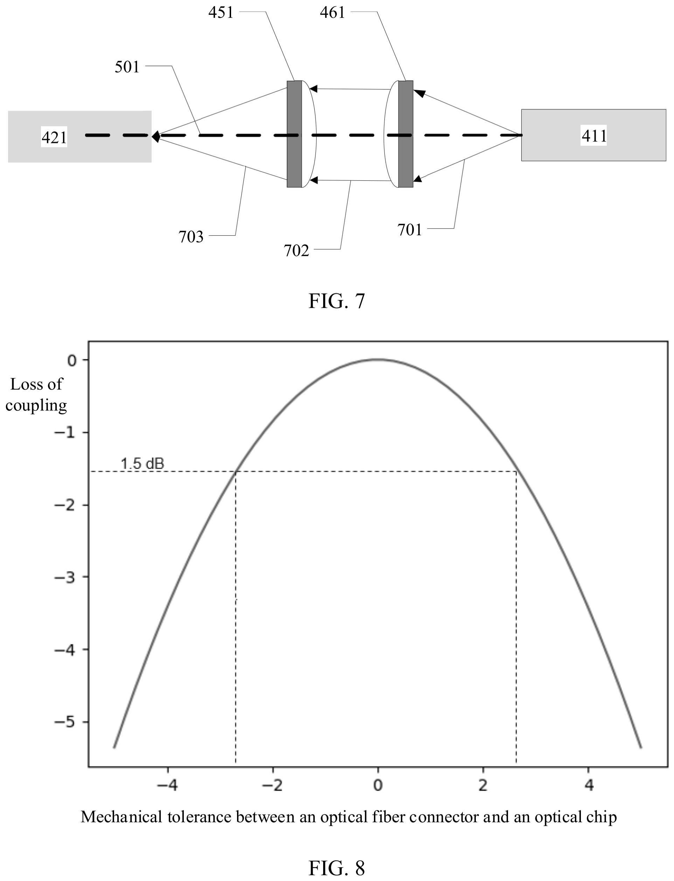

For descriptions of an optical path of the first optical channel, refer to FIG. 7. FIG. 7 is an example diagram of the optical path of the first optical channel according to this application. When the center of the inlet optical surface of the optical fiber 421, the center of the first lens 451, the center of the second lens 461, and the center of the outlet optical surface of the optical waveguide 411 are located on the same straight line 501, and the curved surface of the first lens 451 and the curved surface of the second lens 461 face each other, an optical signal 701 emitted by the optical waveguide 411 is transmitted to the second lens 461. The second lens 461 is configured to collimate an optical path of the optical signal 701 to output a collimated optical signal 702. The first lens 451 is configured to converge an optical path of the collimated optical signal 702 to output a converged optical signal 703. In this case, the converged optical signal 703 output from the first lens 451 can be converged to the optical fiber 421. In this way, coupling efficiency of transmitting the optical signal output from the optical waveguide 411 to the optical fiber 421 is improved.

The fourth optical channel is used as an example. The optical waveguide 414 is connected to the optical-to-electrical converter, and the optical fiber 424 is configured to receive an optical signal from another optical communication device. The first lens 454 and the second lens 464 included on the fourth optical channel are jointly configured to couple, to the optical waveguide 414, the optical signal that is received by the optical fiber 424 from the another optical communication device. To improve coupling efficiency of coupling the optical signal received from the optical fiber 424 to the optical waveguide 464, the optical fiber 424, the first lens 454, the second lens 464, and the optical waveguide 414 that are on the fourth optical channel are optically aligned in sequence. Specifically, as shown in FIG. 5, that the optical fiber 424, the first lens 454, the second lens 464, and the optical waveguide 414 that are on the fourth optical channel are optically aligned in sequence means that a center of an outlet optical surface of the optical fiber 424, a center of the first lens 454, a center of the second lens 464, and a center of an inlet optical surface of the optical waveguide 414 are located on a same straight line 502. The outlet optical surface of the optical fiber 424 faces the first lens 454, and is configured to emit an optical signal to the first lens 454. The inlet optical surface of the optical waveguide 414 faces the second lens 464, and is configured to receive an optical signal from the second lens 464. In addition, a curved surface of the first lens 454 and a curved surface of the second lens 464 face each other. When the optical fiber 424 receives an optical signal from another optical communication, the optical fiber 424 transmits the received optical signal to the first lens 454. The first lens 454 is configured to collimate an optical path of the optical signal to output a collimated optical signal. The second lens 464 is configured to converge an optical path of the collimated optical signal to output a converged optical signal. In this case, the converged optical signal output from the second lens 464 can be converged to the optical waveguide 464. In this way, coupling efficiency of transmitting the optical signal output from the optical fiber 424 to the optical waveguide 464 is improved.

The following describes beneficial effects of the photoelectric conversion apparatus in this embodiment.

It can be learned from the descriptions of the structure that is of the photoelectric conversion apparatus and that is shown in FIG. 3 that, the photoelectric conversion apparatus shown in this embodiment adopts 3D packaging. That is, the optical chip is flip-chip soldered on the EIC. Consequently, a packaging size of the photoelectric conversion apparatus is reduced, and an integration level of the photoelectric conversion apparatus is improved. The optical chip is soldered on the EIC in a flip-chip soldering manner, and the EIC is also soldered to the switch substrate in the flip-chip soldering manner. This effectively reduces a distance between the PIC and the EIC of the optical chip, and reduces a distance between the logic processing chip and the EIC, thereby effectively reducing power consumption of the photoelectric conversion apparatus. The optical fiber connector connected to the optical chip and another optical fiber connector are further in a detachable connection state. The another optical fiber connector is connected to an optical fiber array of a considerable length. In a process of flip-chip soldering the optical chip, the optical fiber connector and the another optical fiber connector may be in a separated state. In this case, the optical fiber array that has the considerable length and that is connected to the another optical fiber connector does not cause operation interference to flip-chip soldering of the optical chip. That is, in a process of placing the optical chip in a reflow soldering oven for soldering, there is no need to hold the optical fiber array connected to the another optical fiber connector. This reduces difficulty in performing a flip-chip reflow soldering process on the optical chip, and improves operation efficiency of flip-chip soldering the optical chip.

As shown in FIG. 2, when the photoelectric conversion apparatus 103 is packaged but is not flip-chip soldered to the switch substrate 100, the photoelectric conversion apparatus 102 has a test interface, and an external test device may be connected to the test interface of the photoelectric conversion apparatus 103. For example, the external test device may send an optical signal to the photoelectric conversion apparatus 103 through the test interface of the photoelectric conversion apparatus 103, to test whether the photoelectric conversion apparatus 103 can successfully receive the optical signal and perform optical-to-electrical conversion on the optical signal. For another example, the external test device may receive an optical signal from the photoelectric conversion apparatus 103 through the test interface of the photoelectric conversion apparatus 103. The external test device can test whether the packaged photoelectric conversion apparatus 103 can normally receive and send an optical signal. If the photoelectric conversion apparatus 103 can normally receive and send the optical signal, the external test device determines that the photoelectric conversion apparatus 103 is a known good die (known good die, KGD). Then, the photoelectric conversion apparatus 103 that is the KGD is flip-chip soldered to the switch substrate 100, and is placed in the reflow soldering oven to complete the soldering. It may be understood that the photoelectric conversion apparatus 103 is soldered to the switch substrate 100 only when it is determined that the photoelectric conversion apparatus 103 is the KGD. This improves a product yield of the optical communication device.

The first lens array and the second lens array shown in this embodiment can effectively improve coupling efficiency between the optical fiber array and the optical waveguide array. Specifically, the optical fiber connector and the optical chip in this embodiment are detachably connected in a mechanical manner (for example, the foregoing manner of inserting the positioning pin into the positioning hole). In this case, because a mechanical tolerance exists, when the optical fiber connector is connected to the optical chip, precision of optically aligning the optical fiber array and the optical waveguide array is very low. The mechanical tolerance (which may also be referred to as a mechanical tolerance) is an error range allowed for a detachable connection between the optical fiber connector and the optical chip, and a mechanical tolerance range usually is large. However, in this embodiment, the first lens array and the second lens array are used between the optical fiber array and the optical waveguide array, and the optical fiber array and the optical waveguide array are precisely optically aligned based on both the first lens array and the second lens array. In this way, even if the mechanical tolerance exists between the optical fiber connector and the optical chip, high-precision coupling between the optical fiber array and the optical waveguide array can be implemented, which improves coupling efficiency. Because the first lens array and the second lens array jointly adjust an optical path between the optical waveguide array and the optical fiber array, a large mechanical tolerance range can be allowed for the connection between the optical fiber connector and the optical chip. That is, the mechanical tolerance of the detachable connection between the optical fiber connector and the optical chip is compensated to some extent, and mechanical difficulty in processing the optical fiber connector and the optical chip is further reduced. This improves production efficiency.

The first lens array and the second lens array shown in this embodiment are fastened on the fastening substrate of the optical chip. The fastening substrate can fasten the first lens array and the second lens array. This effectively avoids a case in which the first lens rotates relative to the first plane XY, avoids a case in which the second lens rotates relative to the first plane XY, or avoids a case in which the first lens and the second lens cannot be optically aligned because of position shift of the first lens and/or the second lens. This effectively ensures that the first lens and the second lens are always in an optically aligned state in a packaging process and a subsequent use process of the optical chip, and effectively ensures coupling efficiency between the optical waveguide array and the optical fiber array.

In an existing solution, the optical fiber connector includes the first lens array, and the optical chip includes a silicon substrate, and the optical waveguide array and the second lens array are formed on the silicon substrate. When the optical fiber connector is connected to the optical chip, the optical fiber array and the optical waveguide array are coupled based on the first lens array and the second lens array. Because mechanical precision of the detachable connection between the optical fiber connector and the optical chip is low, the first lens array and the second lens array cannot be optically aligned with high precision. To ensure coupling efficiency between the optical waveguide array and the optical fiber array, the second lens array needs to be bonded to the silicon substrate of the optical chip through optical glue. Specifically, a refractive index of the optical glue needs to match a refractive index of cladding of the optical waveguide, and a material of the cladding of the optical waveguide may be silicon dioxide (SiO2) or the like. For example, the refractive index of the optical glue is greater than a refractive index of air and less than a refractive index of the optical waveguide. Therefore, an optical signal from the optical waveguide can be constrained to the second lens array as much as possible to transmit the optical signal to the optical fiber, and an optical signal from the optical fiber can also be constrained to the second lens array as much as possible to transmit the optical signal to the optical waveguide. If the second lens array is not bonded to the optical chip through the optical glue, a loss of the optical signal transmitted between the optical fiber array and the optical waveguide array is increased, and coupling efficiency is reduced. However, bonding performance of the optical glue is poor. If the optical chip is placed in the reflow soldering oven for high-temperature reflow, it may cause position shift and misalignment of the second lens array, or even falling off of the second lens array from the optical chip. This reduces the product yield of the optical chip.

The first lens array and the second lens array shown in this application are both bonded to the surface of the fastening substrate 402 through mechanical glue. Because the first lens array and the second lens array shown in this example are both fastened on the same fastening substrate 402, even if the mechanical tolerance of the connection between the optical fiber connector and the optical chip is large, the first lens array and the second lens array can be optically aligned with high precision. In this case, an optical path for transmitting an optical signal does not need to be constrained through the optical glue. Therefore, the first lens array and the second lens array are both fastened through the mechanical glue. The mechanical glue is resistant to a high temperature. Therefore, even if the optical chip is in the reflow soldering oven, a case of position shift and misalignment or even falling off of the first lens array and/or the second lens array does not occur. This effectively ensures that the first lens array and the second lens array are always in the optically aligned state, and effectively ensures coupling efficiency between the optical waveguide array and the optical fiber array.

In the existing solution, the optical fiber connector includes the first lens array, and the optical chip includes the second lens array, and a large mechanical tolerance exists in the connection between the optical fiber connector and the optical chip. Therefore, the first lens array and the second lens array are very likely to rotate. Either small-angle rotation of the first lens array or small-angle rotation of the second lens array causes a large coupling insertion loss between the optical fiber array and the optical waveguide array. However, the first lens array and the second lens array shown in this embodiment are both fastened on the same fastening substrate through the mechanical glue. Because the fastening substrate has joint limitation effect on the positions of the first lens array and the second lens array, the fastening substrate can effectively reduce rotation of both the first lens array and the second lens array, which improves coupling efficiency between the optical fiber array and the optical waveguide array.

In an existing optical chip, a first connecting member is disposed on a heat dissipation panel included in the optical chip. In consideration of an integration level of the optical chip, a length of the heat dissipation panel in the second direction Y is limited. Therefore, a position of the first connecting member on the heat dissipation panel is limited, and a type of the optical fiber connector connected to the optical chip is limited. However, the fastening substrate 402 shown in this embodiment has a specific length in the second direction Y. Therefore, the first connecting member may be disposed for the optical chip at a position opposite to a position of the second connecting member of the optical fiber connector based on different models of optical fiber connectors connected to the optical chip. In this way, the optical chip shown in this embodiment can adapt to different types of optical fiber connectors.

In the foregoing embodiment, an example in which the first lens array and the second lens array are bonded to the fastening substrate 402 through the mechanical glue is used. This is not limited. For example, the fastening substrate 402 extends in a direction away from the fastening substrate 402 to form the first lens array and the second lens array. It may be understood that the fastening substrate 402, the first lens array, and the second lens array that are shown in this example are implemented in an integrated molding manner. This further improves stability of structures of the first lens array and the second lens array that are fastened on the fastening substrate, and effectively ensures coupling efficiency between the optical fiber array and the optical waveguide array. In addition, in the integrated molding manner, the first lens array and the second lens array do not need to be fastened on the fastening substrate through the optical glue or the mechanical glue, which avoids a case in which the optically aligned state between the first lens array and the second lens array changes in the high-temperature reflow soldering oven.

Still refer to FIG. 4. The optical chip shown in this embodiment further includes a heat dissipation panel 470 configured to dissipate heat for the PIC 401. A surface of the heat dissipation panel 470 includes a bonding layer 471. The bonding layer 471 is located between the fastening substrate 402 and the heat dissipation panel 470, between the PIC 401 and the heat dissipation panel 470, and between the fastening substrate 402 and the PIC 402. In this case, the heat dissipation panel 470 and the fastening substrate 402 are fastened via the bonding layer 471, the heat dissipation panel 470 and the PIC 401 are fastened via the bonding layer 471, and the fastening substrate 402 and the PIC 401 are also fastened via the bonding layer 471. The bonding layer 471 shown in this embodiment is formed by the mechanical glue, which ensures that a structure of the optical chip is stable and that the optical chip can withstand the high temperature in the reflow soldering oven.

A glue overflow groove 472 is concavely disposed on the surface of the fastening substrate 402 to prevent the mechanical glue of the bonding layer 471 from contaminating a second lens component. In addition, the glue overflow groove 472 is located between the second lens array 460 and the PIC 401, so that even if the mechanical glue overflows between the PIC 401 and the fastening substrate 402, the overflowed mechanical glue is accommodated in the glue overflow groove 472 and flows out from the glue overflow groove 472. This effectively prevents the mechanical glue from contaminating the second lens component, and avoids a case in which coupling efficiency between the optical waveguide array and the optical fiber array is reduced because the second lens component is contaminated by the mechanical glue. In addition, based on the bonding layer made of the mechanical glue, a degree of warping and deformation of the optical chip because of thermal stress can be reduced as much as possible. Therefore, even if the optical chip undergoes the high temperature in the reflow soldering oven, coupling efficiency between the optical fiber array and the optical waveguide array can be ensured.

With reference to FIG. 8, the optical chip in this embodiment can improve a loss of coupling between the optical fiber array and the optical waveguide array. FIG. 8 is an example diagram of simulation of transmitting an optical signal between the optical chip and the optical fiber connector. FIG. 8 shows a correspondence between the loss of coupling and the mechanical tolerance of the connection between the optical fiber connector and the optical chip. A horizontal coordinate in FIG. 8 represents the mechanical tolerance of the connection between the optical fiber connector and the optical chip, and a unit is micrometer (µm). A vertical coordinate represents the loss of coupling between the optical fiber array and the optical waveguide array, and a unit is decibel (dB). Because the optical chip shown in this embodiment is used, the first lens array and the second lens array can be optically aligned with high precision. Therefore, the mechanical tolerance between the optical fiber connector and the optical chip is within a range of -2.6 µm to +2.6 µm, and a corresponding loss of coupling is -1.5 dB to 0 dB. The range of -2.6 µm to +2.6 µm that the mechanical tolerance between the optical fiber connector and the optical chip is within is a mechanical tolerance range that can be reached by a standard optical fiber connector in the industry. A small loss of coupling (that is, within the range of -1.5 dB to 0 dB) can be obtained within the mechanical tolerance range.

The following describes optional structures of the photoelectric conversion apparatus.

### Optional structure 1

For the structure that is of the photoelectric conversion apparatus and that is shown in this example, refer to FIG. 3. For details, refer to the embodiment corresponding to FIG. 3. Details are not described again. The solder balls 203 led out from the EIC of the photoelectric conversion apparatus shown in this embodiment are directly soldered to the switch substrate 100 shown in FIG. 2, to communicate an electrical signal with the logic processing chip 102.

### Optional structure 2

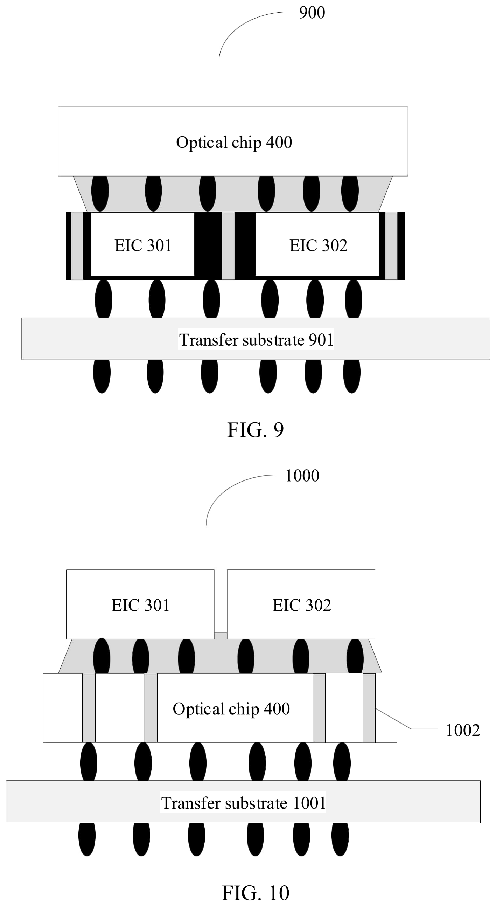

For the structure that is of the photoelectric conversion apparatus and that is shown in this example, refer to FIG. 9. FIG. 9 is an example diagram of the structure of a second embodiment of the photoelectric conversion apparatus according to this application. The photoelectric conversion apparatus includes a transfer substrate 901, the EIC 301, the EIC 302, and the optical chip 400. For descriptions of structures of the EIC 301, the EIC 302, and the optical chip 400, refer to the foregoing embodiments. Details are not described again. Each EIC is flip-chip soldered to the transfer substrate 901, and the optical chip 400 is flip-chip soldered to a side surface that is of the EIC and that is away from the transfer substrate 901. The transfer substrate 901 shown in this embodiment is soldered to the switch substrate 100 shown in FIG. 2 by using the BGA, to communicate an electrical signal between the photoelectric conversion apparatus and the logic processing chip 102. The optical chip 400 and each EIC that are shown in this embodiment both communicate an electrical signal through the transfer substrate 901. For descriptions of electrical signal conduction implemented by the transfer substrate 901 shown in this example, refer to the descriptions of the switch substrate in the embodiment corresponding to FIG. 1. Details are not described again. The transfer substrate 901 shown in this embodiment has a test interface. An external test device may test whether the photoelectric conversion apparatus is a KGD through the test interface. For descriptions of testing the photoelectric conversion apparatus by the external test device, refer to the embodiment corresponding to FIG. 2. Details are not described herein again.

### Optional structure 3

The photoelectric conversion apparatus shown in this example is also packaged in a 3D manner. For details, refer to FIG. 10. FIG. 10 is an example diagram of the structure of a third embodiment of the photoelectric conversion apparatus according to this application.

The photoelectric conversion apparatus shown in this example includes the optical chip 400 and two EICs, for example, the EIC 301 and the EIC 302. A quantity of EICs included in the photoelectric conversion apparatus is not limited in this example. Each EIC included in the photoelectric conversion apparatus is flip-chip soldered to the optical chip 400. That is, solder balls led out from the EIC are soldered to the optical chip 400. The optical chip 400 is flip-chip soldered to a switch substrate. For descriptions of the switch substrate, refer to FIG. 2. Details are not described again. It may be understood that the EIC shown in this embodiment is flip-chip soldered to a side surface that is of the optical chip and that is away from the switch substrate. Packaging of the optical chip 400 shown in this embodiment further includes a through silicon via (through silicon via, TSV) 1002. The EIC is electrically connected to the switch substrate through the TSV 1002.

Optionally, the photoelectric conversion apparatus in this example further includes a transfer substrate 1001. The optical chip 400 in this example is flip-chip soldered to the transfer substrate 1001. In this case, each EIC is flip-chip soldered to a side surface that is of the optical chip 400 and that is away from the transfer substrate 1001. The transfer substrate 1001 shown in this example is soldered to the switch substrate 100 shown in FIG. 2 by using the BGA, to communicate an electrical signal with the logic processing chip 102. The optical chip 400 and each EIC that are shown in this example communicate an electrical signal through the transfer substrate 1001. The EIC is electrically connected to the transfer substrate 1001 through the TSV 1002 of the optical chip 400. The transfer substrate 1001 shown in this embodiment has a test interface. An external test device may test whether the photoelectric conversion apparatus is a KGD through the test interface. For descriptions of testing the photoelectric conversion apparatus by the external test device, refer to the embodiment corresponding to FIG. 2. Details are not described herein again.

Optionally, the photoelectric conversion apparatus shown in this embodiment may not include the transfer substrate 1001, and solder balls led out from the optical chip are directly flip-chip soldered to the switch substrate 100 shown in FIG. 2. Details are not described herein again.

The optional structure 1 to the optional structure 3 all use 3D packaging which can improve density of a packaged optical fiber array, reduce an overall packaging size of the photoelectric conversion apparatus, and improve an integration level of the photoelectric conversion apparatus.

### Optional structure 4

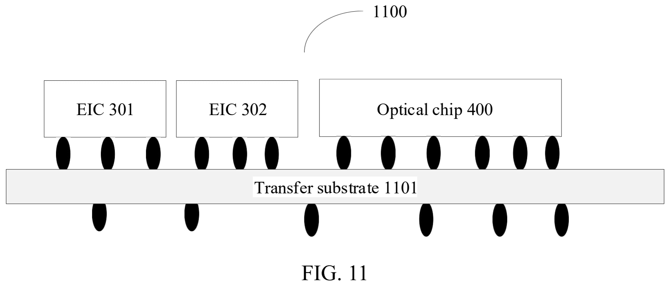

For the structure that is of the photoelectric conversion apparatus and that is shown in this example, refer to FIG. 11. FIG. 11 is an example diagram of the structure of a fourth embodiment of the photoelectric conversion apparatus according to this application.

The photoelectric conversion apparatus shown in this example includes, for example, the optical chip 400, a transfer substrate 1801, the EIC 301, and the EIC 302. A quantity of EICs included in the photoelectric conversion apparatus is not limited in this example. The photoelectric conversion apparatus shown in this example is packaged in a 2D manner, and the optical chip and each EIC are both flip-chip soldered to the transfer substrate 1101. For descriptions of the transfer substrate 1101, refer to the optional structure 2. Details are not described again. The optical chip and each EIC that are shown in this embodiment communicate an electrical signal through the transfer substrate 1101. It may be understood that the optical chip and the EIC that are shown in this example are packaged side by side on the transfer substrate 1101. The 2D manner is adopted for packaging, which improves efficiency of packaging the photoelectric conversion apparatus.

Optionally, the photoelectric conversion apparatus shown in this embodiment may not include the transfer substrate 1101, and solder balls led out from the optical chip and the EIC are directly flip-chip soldered to the switch substrate 100 shown in FIG. 2. Details are not described herein again.

It should be noted that the description of a packaging form of the photoelectric conversion apparatus in this embodiment is an optional example, and is not limited. For example, in another example, the packaging form of the photoelectric conversion apparatus may also adopt a 2.5D packaging form or the like.

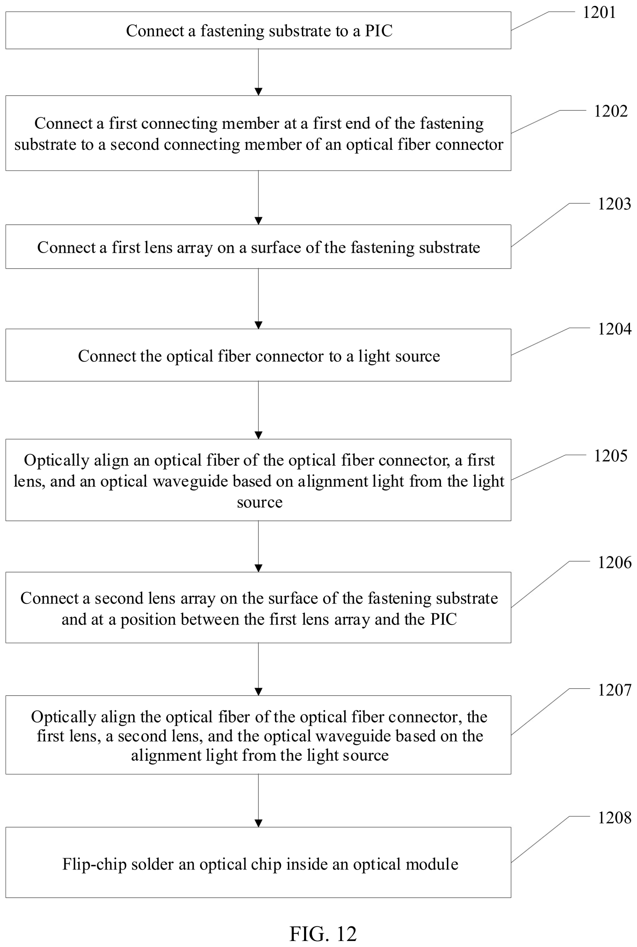

This application further provides a packaging method for an optical chip, as shown in FIG. 12. FIG. 12 is a flowchart of steps of a first embodiment of the packaging method for the optical chip according to this application.

Step 1201: Connect a fastening substrate to a PIC.

For descriptions of the connection between a second end of the fastening substrate and the PIC in this embodiment, refer to the descriptions corresponding to FIG. 4. That is, the fastening substrate 402 and the PIC 401 are bonded via the bonding layer 471, and the bonding layer 471 is further configured to connect to the heat dissipation panel 470 configured to dissipate heat. Details are not described again. It may be understood that after mechanical glue between the second end of the fastening substrate and the PIC is cured, the second end of the fastening substrate and the PIC are in a connected state.

Step 1202: Connect a first connecting member at a first end of the fastening substrate to a second connecting member of an optical fiber connector.

For descriptions of the fastening substrate, the optical fiber connector, and the PIC shown in step 1201 and step 1202 in this embodiment, refer to FIG. 3 to FIG. 6. Details are not described again. Connecting the first end of the fastening substrate to the optical fiber connector means to insert a positioning pin of the fastening substrate into a positioning hole of the optical fiber connector. For specific descriptions, refer to FIG. 4 and FIG. 6. Details are not described again.

Step 1203: Connect a first lens array on a surface of the fastening substrate.

Specifically, on the surface of the fastening substrate 402, the first lens array is bonded through mechanical glue at a position close to the optical fiber connector.

Step 1204: Connect the optical fiber connector to a light source.

The light source shown in this embodiment is located outside the optical chip, and is connected to the optical fiber connector. The optical fiber connector receives alignment light from the light source.

Step 1205: Optically align an optical fiber of the optical fiber connector, a first lens, and an optical waveguide based on the alignment light from the light source.

It may be understood that when the optical fiber connector transmits the alignment light to an optical waveguide array, a position of the first lens can be adjusted, to ensure that the optical fiber of the optical fiber connector, the first lens, and the optical waveguide can be optically aligned in an active manner. In this embodiment, when the mechanical glue between the first lens array and the fastening substrate is not cured, the position of the first lens array is adjusted until the optical fiber of the optical fiber connector, the first lens, and the optical waveguide that are on each optical channel included in the optical chip are in an optically aligned state based on the alignment light. It may be understood that after the mechanical glue between the first lens array and the fastening substrate is cured, the optical fiber of the optical fiber connector, the first lens, and the optical waveguide that are on each optical channel are always in the optically aligned state. Specifically, a center of an optical surface of the optical fiber, a center of the first lens, and a center of an optical surface of the optical waveguide are located on a same straight line. The optical surface of the optical fiber faces the first lens, the optical surface of the optical waveguide faces the first lens, and a curved surface of the first lens faces the optical waveguide. For specific descriptions, refer to FIG. 4 to FIG. 7. Details are not described again.

Step 1206: Connect a second lens array on the surface of the fastening substrate and at a position between the first lens array and the PIC.

The second lens array is bonded on the surface of the fastening substrate and at the position between the first lens array and the PIC through the mechanical glue.

Step 1207: Optically align the optical fiber of the optical fiber connector, the first lens, a second lens, and the optical waveguide based on the alignment light from the light source.

It may be understood that when the optical fiber connector transmits the alignment light to the optical waveguide array, a position of the second lens can be adjusted, to ensure that the optical fiber of the optical fiber connector, the first lens, the second lens, and the optical waveguide can be optically aligned in an active manner. Specifically, when the mechanical glue between the second lens array and the fastening substrate is not cured, the position of the second lens array is adjusted until the optical fiber of the optical fiber connector, the first lens, the second lens, and the optical waveguide that are on each optical channel included in the optical chip are in the optically aligned state. It may be understood that after the mechanical glue between the second lens array and the fastening substrate is cured, the optical fiber of the optical fiber connector, the first lens, the second lens, and the optical waveguide that are on each optical channel are always in the optically aligned state. Specifically, the center of the optical surface of the optical fiber, the center of the first lens, a center of the second lens, and the center of the optical surface of the optical waveguide are located on the same straight line. The optical surface of the optical fiber faces the first lens, the optical surface of the optical waveguide faces the second lens, and the curved surface of the first lens and a curved surface of the second lens face each other. For specific descriptions, refer to FIG. 4 to FIG. 7. Details are not described again.

Step 1208: Flip-chip solder the optical chip inside a photoelectric conversion apparatus.

For details about how the optical chip is specifically soldered inside the photoelectric conversion apparatus, refer to FIG. 3 and FIG. 9 to FIG. 11. Details are not described again.

According to the packaging method for the optical chip shown in this embodiment, the optical fiber of the optical fiber connector, the first lens, and the optical waveguide are first optically aligned. When the first lens is fastened on the fastening substrate, the optical fiber of the optical fiber connector, the first lens, the second lens, and the optical waveguide are then optically aligned. This effectively ensures that the optical fiber of the optical fiber connector, the first lens, the second lens, and the optical waveguide that are on each optical channel in the optical chip are optically aligned. This effectively ensures that even if a specific mechanical tolerance exists in a detachable connection between the fastening substrate and the optical fiber connector, the optical fiber of the optical fiber connector, the first lens, the second lens, and the optical waveguide can be precisely optically aligned by using the packaging method shown in this embodiment. This improves coupling efficiency between an optical fiber array and the optical waveguide array.

This application further provides a CPO chip. The CPO chip includes a switch substrate, a logic processing chip, and a photoelectric conversion apparatus. Both the photoelectric conversion apparatus and the logic processing chip are connected to the switch substrate, and the switch substrate is connected to a PCB. In this embodiment, an example in which the logic processing chip and the photoelectric conversion apparatus are both flip-chip soldered to the switch substrate is used. For details, refer to FIG. 2. Details are not described again.

This application further provides a photoelectric conversion apparatus. For descriptions of a structure of the photoelectric conversion apparatus, refer to any one of examples in FIG. 3, FIG. 9, FIG. 10, and FIG. 11. Details are not described again.

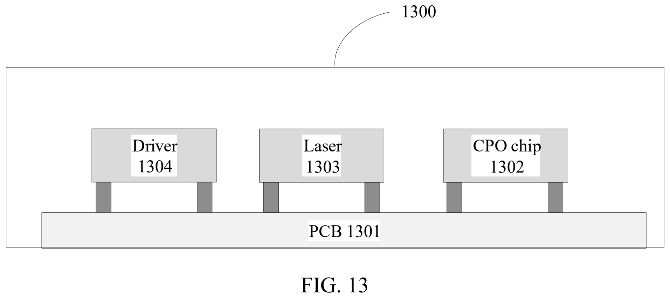

This application further provides an optical communication device. FIG. 13 is an example diagram of a structure of an embodiment of the optical communication device according to this application. The optical communication device includes an outer housing 1300, a circuit board 1301, a driver 1304, a laser 1303, and a CPO chip 1302. The outer housing 1300 shown in this embodiment is configured to fasten the circuit board 1301. In this embodiment, an example in which the circuit board 1301 is a PCB is used. A type of the circuit board is not specifically limited. The driver 1304, the laser 1303, and the CPO chip 1302 are all packaged on a surface of the PCB 1301. For example, at least one of the driver 1304, the laser 1303, and the CPO chip 1302 may be packaged on the surface of the PCB 1301 via a socket. For another example, at least one of the driver 1304, the laser 1303, and the CPO chip 1302 may be packaged on the surface of the PCB 1301 in a flip-chip soldering manner. This is not specifically limited in this embodiment.

If the CPO chip 1302 is configured to send a first service to another optical communication device, a logic processing chip of the CPO chip 1302 sends a first electrical signal that carries the first service to a photoelectric conversion apparatus, and the driver 1304 drives the laser 1303 to send a first optical signal to the CPO chip 1302. The photoelectric conversion apparatus of the CPO chip 1302 receives the first optical signal from the laser 1303. The photoelectric conversion apparatus is further configured to modulate the first electrical signal onto the first optical signal to obtain a modulated first optical signal. The CPO chip 1302 sends the modulated first optical signal to the another optical communication device through an optical fiber connector.

If the CPO chip 1302 is configured to receive a second service from the another optical communication device, the photoelectric conversion apparatus receives, from the another optical communication device through the optical fiber connector, a second optical signal that carries the second service. The photoelectric conversion apparatus performs optical-to-electrical conversion on the second optical signal to obtain a second electrical signal, and sends the second electrical signal to the logic processing chip of the CPO chip 1302. Components such as a trans-impedance amplifier and a power supply may be further packaged on the PCB 1301 shown in this embodiment. A type of the component packaged on the PCB 1301 is not specifically limited.

This application further provides an optical network. The optical network includes at least two optical communication devices that are connected through an optical fiber. For descriptions of the optical communication device, refer to FIG. 13. Details are not described again.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An optical chip, comprising a photonic integrated circuit PIC, a fastening substrate, a first lens array, and a second lens array, wherein
a first end of the fastening substrate is configured to detachably connect to an optical fiber connector, a second end of the fastening substrate is connected to the PIC, the first lens array and the second lens array are connected on a surface of the fastening substrate, and the second lens array is located between the PIC and the first lens array; and
the optical chip comprises at least one optical channel, each of the at least one optical channel comprises an optical waveguide located on a surface of the PIC, a second lens comprised in the second lens array, and a first lens comprised in the first lens array, wherein an optical fiber of the optical fiber connector, the first lens, the second lens, and the optical waveguide are optically aligned in sequence, and the first lens and the second lens are jointly configured to converge an optical signal from the optical waveguide to the optical fiber, or the first lens and the second lens are jointly configured to converge an optical signal from the optical fiber to the optical waveguide.

2. The optical chip according to claim 1, wherein a center of an optical surface of the optical fiber, a center of the first lens, a center of the second lens, and a center of an optical surface of the optical waveguide are located on a same straight line, the optical surface of the optical fiber faces the first lens, the optical surface of the optical waveguide faces the second lens, and a curved surface of the first lens and a curved surface of the second lens face each other.

3. The optical chip according to claim 1 or 2, wherein both the first lens array and the second lens array are both bonded to the surface of the fastening substrate through mechanical glue.

4. The optical chip according to claim 1 or 2, wherein the fastening substrate extends in a direction away from the surface of the fastening substrate to form the first lens array and the second lens array.

5. The optical chip according to any one of claims 1 to 4, wherein the optical chip further comprises a heat dissipation panel, a surface of the heat dissipation panel comprises a bonding layer formed by the mechanical glue, the heat dissipation panel and the fastening substrate are fastened via the bonding layer, the heat dissipation panel and the PIC are fastened via the bonding layer, and the fastening substrate and the PIC are fastened via the bonding layer; and
a glue overflow groove is concavely disposed on the surface of the fastening substrate, and the glue overflow groove is located between the second lens array and the PIC.

6. The optical chip according to any one of claims 1 to 5, wherein a first connecting member is disposed at the first end of the fastening substrate, and the first connecting member is configured to detachably connect to a second connecting member of the optical fiber connector.

7. A packaging method for an optical chip, wherein the optical chip comprises a photonic integrated circuit PIC, a fastening substrate, a first lens array, and a second lens array, and the method comprises:
connecting a second end of the fastening substrate to the PIC;
connecting a first end of the fastening substrate to an optical fiber connector;
connecting the first lens array on a surface of the fastening substrate, wherein the optical chip comprises at least one optical channel, and each of the at least one optical channel comprises a first lens in the first lens array and an optical waveguide located on a surface of the PIC;
optically aligning an optical fiber of the optical fiber connector, the first lens, and the optical waveguide;
connecting the second lens array on the surface of the fastening substrate and at a position between the first lens array and the PIC, wherein the optical channel further comprises a second lens in the second lens array; and
optically aligning the optical fiber of the optical fiber connector, the first lens, the second lens, and the optical waveguide.

8. The method according to claim 7, wherein the optical fiber connector is configured to connect to a light source, the optical fiber connector is configured to receive alignment light from the light source, and optically aligning the optical fiber of the optical fiber connector, the first lens, and the optical waveguide comprises:
optically aligning the optical fiber of the optical fiber connector, the first lens, and the optical waveguide based on the alignment light; and
optically aligning the optical fiber of the optical fiber connector, the first lens, the second lens, and the optical waveguide comprises:
optically aligning the optical fiber of the optical fiber connector, the first lens, the second lens, and the optical waveguide based on the alignment light.

9. The method according to claim 7 or 8, wherein a center of an optical surface of the optical fiber, a center of the first lens, a center of the second lens, and a center of an optical surface of the optical waveguide are located on a same straight line, the optical surface of the optical fiber faces the first lens, the optical surface of the optical waveguide faces the second lens, and a curved surface of the first lens and a curved surface of the second lens face each other.

10. The method according to any one of claims 7 to 9, wherein connecting the first lens array on the surface of the fastening substrate comprises:
bonding the first lens array on the surface of the fastening substrate through mechanical glue; and
connecting the second lens array on the surface of the fastening substrate and at the position between the first lens array and the PIC comprises:
bonding the second lens array on the surface of the fastening substrate and at the position between the first lens array and the PIC through the mechanical glue.

11. The method according to any one of claims 7 to 10, wherein before connecting the first lens array on the surface of the fastening substrate, the method further comprises:
disposing a bonding layer formed by the mechanical glue on a surface of a heat dissipation panel;
connecting the heat dissipation panel and the fastening substrate via the bonding layer;
connecting the heat dissipation panel and the PIC via the bonding layer; and
concavely disposing a glue overflow groove on the surface of the fastening substrate, wherein the glue overflow groove is located between the second lens array and the PIC; and
connecting the second end of the fastening substrate to the PIC comprises:
connecting the fastening substrate and the PIC via the bonding layer.

12. The method according to any one of claims 7 to 11, wherein connecting the first end of the fastening substrate to the optical fiber connector comprises:
disposing a first connecting member at the first end of the fastening substrate; and
detachably connecting to a second connecting member at the optical fiber connection end through the first connecting member.

13. A photoelectric conversion apparatus, comprising at least one electronic integrated circuit EIC and the optical chip according to any one of claims 1 to 6, wherein each of the at least one EIC is electrically connected to the optical chip.

14. The photoelectric conversion apparatus according to claim 13, wherein each EIC is flip-chip soldered to a transfer substrate, the optical chip is flip-chip soldered to a side surface that is of the EIC and that is away from the transfer substrate, and the EIC is electrically connected to the optical chip through the transfer substrate.

15. The photoelectric conversion apparatus according to claim 13, wherein the optical chip is flip-chip soldered to a transfer substrate, the EIC is flip-chip soldered to a side surface that is of the optical chip and that is away from the transfer substrate, and the EIC is electrically connected to the optical chip through the transfer substrate.

16. The photoelectric conversion apparatus according to claim 13, wherein the optical chip and each EIC are both flip-chip soldered to a transfer substrate, and the EIC is electrically connected to the optical chip through the transfer substrate.

17. A co-packaged optics chip, comprising a switch substrate, a logic processing chip, and the photoelectric conversion apparatus according to any one of claims 13 to 16, wherein the logic processing chip and the photoelectric conversion apparatus are both flip-chip soldered to the switch substrate.

18. An optical communication device, comprising an outer housing, a circuit board, a driver, a laser, and the co-packaged optics chip according to claim 17, wherein the inside of the outer housing is configured to fasten the circuit board, and the driver, the laser, and the co-packaged optics chip are all packaged on a surface of the circuit board; and
the driver is configured to drive the laser to send a first optical signal to the co-packaged optics chip, wherein the co-packaged optics chip is configured to modulate the first optical signal to obtain a modulated first optical signal, and the co-packaged optics chip is configured to emit the modulated first optical signal; or
the co-packaged optics chip is configured to receive a second optical signal, and the co-packaged optics chip is further configured to convert the second optical signal into an electrical signal through optical-to-electrical conversion.
